# EUROPÄISCHE PATENTSCHRIFT

(11) **EP 3 051 095 B1**
(45) Veröffentlichungstag und Bekanntmachung des Hinweises auf die Patenterteilung: **05.12.2018**
(21) Anmeldenummer: 15003056.7
(22) Anmeldetag: 26.10.2015
(51) Int. Cl.: F02B 19/12, F02D 19/06, F02B 1/02, F02D 41/00, F02D 19/08

(54) **Verfahren zum Betreiben einer Funkengezündeten Brennkraftmaschine**
Method for operating a spark-ignited internalcombustion engine
Procédé destiné au fonctionnement d'un moteur à combustion interne à allumage par étincelle

(30) Priorität: 19.12.2014 AT 9242014
(43) Veröffentlichungstag der Anmeldung: 03.08.2016
(73) Patentinhaber: GE Jenbacher GmbH & Co. OG, 6200 Jenbach (AT)
(72) Erfinder: Gruber, Friedrich, 6283 Hippach (AT); Spyra, Nikolaus, 6020 Innsbruck (AT); Trapp, Christian, 6067 Absam (AT); Tinschmann, Georg, 6130 Schwaz (AT); Musu, Ettore, 41051 Modena (IT); Christiner, Peter, 8055 Graz (AT)
(74) Vertreter: Torggler & Hofinger Patentanwälte

(56) Entgegenhaltungen:
- US-A- 4 892 070
- US-A1- 2013 055 985
- JOHN B.: "Internal Combustion Engine Fundamentals, New York", 1988, MCGRAW-HILL, XP002758565, * Seite 376 - Seite 383 *

## Beschreibung

Die vorliegende Erfindung ist auf ein Verfahren zum Betreiben einer funkengezündeten Brennkraftmaschine mit den Merkmalen des Oberbegriffs von Anspruch 1 und auf eine funkengezündete Brennkraftmaschine mit den Merkmalen des Oberbegriffs von Anspruch 12 gerichtet.

Bei der Auslegung von funkengezündeten Brennkraftmaschinen besteht ein Zielkonflikt bei der Reduktion verschiedener Arten von Emissionen wie Stickoxiden (NOx), unverbrannten Kohlenwasserstoffen (HC) und Kohlenmonoxid (CO).

Ein vielversprechender Ansatz für eine Verbrennung mit hohem Wirkungsgrad und geringen Emissionen ist das sogenannte HCCI-Konzept, (engl. *Homogenous Charge Compression Ignition*). Hier erfolgt die Entzündung einer hochverdünnten (das heißt mager gemischt und/oder mit einer hohen Abgasrückführrate) und homogenen Kraftstoff-Luft-Mischung durch den Temperaturanstieg während des Verdichtungstaktes nahe dem oberen Totpunkt. Die stark verdünnte Kraftstoff-Luft-Mischung erlaubt eine Verbrennung mit extrem geringen Werten von Stickoxiden (NOx).

Die Selbstentzündung des Kraftstoff-Luft-Gemisches in der Brennkammer wird durch eine Kombination verschiedener Maßnahmen erreicht, wie zum Beispiel ein hohes geometrisches Verdichtungsverhältnis ε und ein Vorwärmen der Ladung durch geeignete Maßnahmen (zum Beispiel Vorwärmen der Ladeluft oder Abgasrückführung, AGR).

Da im HCCI Brennverfahren das Kraftstoff-Luft-Gemisch mehr oder weniger gleichzeitig in der gesamten Brennkammer nahe dem oberen Totpunkt zündet, läuft das Verbrennungsereignis extrem schnell ab.

Mit dem HCCI-Konzept sind einige Probleme verbunden. Die Verbrennung ist schwer zu kontrollieren. Ein zweiter Kraftstoff mit unterschiedlichen Selbstzündungseigenschaften als der erste Kraftstoff ist ein bekanntes Konzept, um die Kontrollierbarkeit zu verbessern. Dies hat natürlich den Nachteil, dass es die Handhabung eines zweiten Kraftstoffes erfordert.

Im Gegensatz dazu kann bei funkengezündeten Brennkraftmaschinen das Timing der Verbrennung leicht durch den Zündzeitpunkt kontrolliert werden. In großen, funkengezündeten Brennkraftmaschinen (typischerweise bei Bohrungen von 150 mm und mehr) sind Vorkammern vorgesehen, in welchen die Zündung initiiert wird.

Aus dem Stand der Technik sind auch Konzepte bekannt, um funkengezündete Brennkraftmaschinen des Vorkammertyps zu kontrollieren. So zeigt beispielsweise die JP 2013209967 eine aktive Vorkammer, wobei die Menge des der Vorkammer zugeführten Kraftstoffes kontrolliert werden kann, um Fehlzündungen zu vermeiden. Weitere aus dem Stand der Technik bekannte Konzepte gehen aus der US 2013/005985 A1 oder der US 4 892 070 A hervor.

Aufgabe der vorliegenden Erfindung ist es, ein Verfahren bzw. eine funkengezündete Brennkraftmaschine anzugeben, welches bzw. welche eine hochleistungsfähige Verbrennung bei gleichzeitig reduzierten Emissionen erlaubt.

Diese Aufgabe wird erreicht durch ein Verfahren gemäß Anspruch 1 und eine funkengezündete Brennkraftmaschine gemäß Anspruch 12. Weitere bevorzugte Ausführungsformen sind in den abhängigen Ansprüchen angegeben.

Gemäß der Erfindung ist vorgesehen, dass eine Menge eines zweiten Kraftstoffes und/oder die chemische Zusammensetzung eines zweiten Kraftstoffes, welcher der Vorkammer zugeführt wird und/oder der Zündzeitpunkt der Vorkammer und/oder eine Temperatur der Ladung im Zylinder so gewählt werden, dass eine gewünschte Brenndauer erreicht wird.

In anderen Worten dienen die Vorkammer und die Temperatur der Zylinderladung als Kontrollmittel, um eine bessere Leistung und reduzierte Emissionen des Verbrennungsereignisses zu erzielen.

Die Erfindung kann am besten ausgeführt werden, wenn vorgesehen ist, dass ein Ventil, welches die Zuführung von Luft und/oder zweiten Kraftstoff in die Vorkammer gewährleistet, aktiv und individuell für jede in der Brennkraftmaschine vorgesehenen Vorkammer kontrolliert werden kann.

Die Zylinderladung ist zusammengesetzt aus einem ersten Kraftstoff, einem zweiten Kraftstoff, Luft und gegebenenfalls von vergangenen Verbrennungszyklen vorhandenes Restgas und möglicherweise einem durch externe Abgasrückführung zugeführten Gas.

Es sei festgehalten, dass durch die Fluidverbindung zwischen der Vorkammer und dem Hauptbrennraum mit "Zylinderladung" die Ladung von dem gemeinsamen Volumen von Hauptbrennraum und Vorkammer gemeint ist, wenn wir über "Zylinderladung" sprechen. Es kann vorgesehen sein, dass der erste Kraftstoff Erdgas oder eine Mischung von Erdgas und Kohlendioxid (CO₂) solchermaßen ist, dass die Menge von CO₂ und Methan (CH₄) höher als 80 % ist.

Es kann vorgesehen sein, dass der zweite Kraftstoff Erdgas oder eine Kombination von Erdgas mit einem Gas mit einem Gehalt von Wasserstoff (H₂) größer als 10 % ist.

Es kann vorgesehen sein, dass die Temperatur der Zylinderladung entweder von einer internen AGR-Rate (AGR = Abgasrückführung), welches im Brennraum während des Gaswechsels verbleibt oder Abgas, welches aus der Brennkammer ausgestoßen und wieder der Brennkammer zugeführt wurde oder durch eine externe AGR, welche in das Einlasssystem rückgeführt wird, kontrolliert wird.

Es kann vorgesehen sein, dass die Temperatur der Zylinderladung kontrolliert wird, indem die Einlasstemperatur von Luft und/oder des ersten Kraftstoffes beeinflusst wird.

Beispielsweise kann vorgesehen sein, dass der Schritt des Änderns der Temperatur der Zylinderladung ein Senken der Temperatur der Zylinderladung umfasst, wenn die mechanischen Spannungen zu groß sind. Dies kann zum Beispiel durch ein Absenken der Einlasstemperatur des ersten Kraftstoffes und des zugeführten Gemisches erzielt werden. Als zugeführtes Gemisch wird entweder eine Mischung von erstem Kraftstoff und Luft, oder Luft alleine verstanden.

Es kann vorgesehen sein, dass, wenn die Brenndauer erhöht werden soll, der Wasserstoffgehalt im zweiten Kraftstoff gesenkt wird, und wenn die Brenndauer verringert werden soll, der Wasserstoffgehalt im zweiten Kraftstoff erhöht wird.

Es kann vorgesehen sein, dass, wenn die Brenndauer erhöht werden soll, die Temperatur der Zylinderladung verringert wird, wenn die Brenndauer verringert werden soll, die Temperatur der Zylinderladung erhöht wird.

Es kann vorgesehen sein, dass der Zündzeitpunkt zum Endzünden der Vorkammer in einem Bereich von 30° Kurbelwinkel vor dem oberen Totpunkt (30 °CA BTDC - *crank angle before top dead center*) bis OT (oberer Totpunkt), entsprechend 0° Kurbelwinkel liegt.

Es kann vorgesehen sein, dass, wenn die Brenndauer erhöht werden soll, der Zündzeitpunkt verzögert wird, wenn die Brenndauer verringert werden soll, der Zündzeitpunkt vorverlegt wird.

Erfindungsgemäß ist es vorgesehen, dass die Zuführungszeit des zweiten Kraftstoffes zwischen 400° bis 40° vor Zünd-OT (engl. *firing TDC*) gewählt wird, ein Lambda-Wert von größer als 1,6, vorzugsweise größer als 1,9, eine AGR-Rate zwischen 0 bis 40 %, die Menge von zweiten Kraftstoff zwischen 0,5 bis 15 % bezüglich des Energiegehaltes des brennbaren Gemisches, die Gemischtemperatur am Einlass des Zylinders zwischen 50 bis 130° C, vorzugsweise zwischen 70 bis 100° C gewählt werden.

Die hier beispielhaft angegebenen Werte für den Kurbelwinkel sind gültig für einen 4-Takt-Motor. Die Erfindung ist in keiner Weise auf einen 4-Takt-Motor beschränkt. Die Erfindung kann beispielsweise auch bei einem 2-, 5- oder 6-Takt-Motor ausgeführt werden.

Es kann vorgesehen sein, dass ein Lambda-Wert von größer als 2,0, vorzugsweise größer als 2,2, die Gemischtemperatur am Einlass der Zylinder zwischen 70 bis 130° C gewählt werden.

Es kann vorgesehen sein, dass
- ein Mitteldruck (break mean effective presssure, BMEP) zwischen 16 und 28 bar liegt,
- ein Verdichtungsverhältnis zwischen 10 und 14 liegt,
- ein Einlassventilschließen bei 1 mm Hub zwischen 30° vor dem unteren Totpunkt und 30° nach dem unteren Totpunkt während des Einlasstaktes liegt.

Die Einlasstemperatur des Kraftstoff-Luft-Gemisches kann durch Eingriff auf den Ladeluftkühler und/oder Änderungen der AGR-Rate beeinflusst werden.

Im Hinblick auf Emissionen kann festgestellt werden, dass gemäß dem erfinderischen Verfahren:
- NOx-Emissionen sehr gering sind, weil sehr hohes Luft-Kraftstoff-Verhältnis (eine sehr magere Mischung) verwendet werden kann, wie es beispielsweise in einer konventionellen funkengezündeten Brennkraftmaschine nicht möglich wäre. Auch wichtig ist, dass sowohl der erste als auch der zweite Kraftstoff mit Luft oder Zylinderladung vor dem Start der Verbrennung vorgemischt werden.
- CO- und HC-Emissionen sind gering, weil die Verbrennung schnell ist und nahe dem oberen Totpunkt endet und weil die Temperatur der Zylinderladung hoch ist.
- Rußemissionen sind gering, weil sowohl der erste als auch der zweite Kraftstoff mit Luft oder Zylinderladung vorgemischt werden.

Die Vorteile der vorliegenden Erfindung scheinen dem Umstand geschuldet zu sein, dass die Brenndauer viel kürzer ist als im Stand der Technik für sehr magere Gemische. Diese Kombination wird im Stand der Technik nicht erreicht. Es ist wohlbekannt, dass eine schnelle Verbrennung in Verbindung mit einem mageren Gemisch einen hohen Wirkungsgrad ergibt.

Wie bereits festgestellt, gestattet es die Erfindung durch Wahl einer Temperatur der Zylinderladung die Brenndauer zu beeinflussen.

Indem eine höhere Temperatur der Zylinderladung gewählt wird, kann die Brenndauer verringert werden und damit weniger unverbrannte Kohlenwasserstoffe und CO erzeugt werden, sowie ein höherer Wirkungsgrad der Brennkraftmaschine realisiert werden. Daher verbindet die Erfindung geringe Emission mit hohem Wirkungsgrad.

Im Folgenden werden die Begriffe "Brenndauer" und "Schwerpunktslage" (der Verbrennung) verwendet. Die Dauer der Verbrennung, auch Brenndauer, ist ein Maß für den Verbrennungsfortschritt in einem Verbrennungszyklus, ausgedrückt als der innerhalb eines bestimmten Kurbelwinkels verbrannte Massenanteil. So bedeutet beispielsweise eine Brenndauer von Δθ_{0-10%} von 15° Kurbelwinkel, dass 10 % der Ladungsmasse innerhalb 15° Kurbelumdrehung verbrannt sind.

Die Schwerpunktlage (engl. *combustion center of gravity*) der Verbrennung bezeichnet den Zustand, in welchem die Hälfte der Frischladung verbrannt ist. Dieser ist auch als MFB 50 bekannt, das heißt 50 % der Masse ist verbrannt (engl. *mass fraction burned*). Für die Begriffe sei auf Lehrbücher zu Brennkraftmaschinen verwiesen, siehe im speziellen Heywood, John B., Internal Combustion Engine Fundamentals, New York, McGraw-Hill, 1988.

Die Schwerpunktlage der Verbrennung beeinflusst den Wirkungsgrad der Brennkraftmaschine und die Menge der erzeugten Emissionen.

Besonders bevorzugt ist ein Ausführungsbeispiel, bei welchem die Schwerpunktlage der Verbrennung, das heißt, bis zu welcher die Hälfte der Energie zur Verbrennung freigesetzt wurde, auf 5 bis 7° nach dem oberen Totpunkt abgestimmt ist.
Um die Schwerpunktlage der Verbrennung zu bestimmen, kann der Kurbelwinkel des Zünddruckes (engl. *peak firing pressure*) verwendet werden.

Bezüglich der Gase beziehen sich alle in % angegebenen Werte auf Volumenprozent.

Es ist zu berücksichtigen, dass die Menge und/oder die chemische Zusammensetzung des in die Vorkammer eingeführten zweiten Kraftstoffes, welche beide die Schwerpunktlage der Verbrennung beeinflussen, so gewählt werden sollen, dass ein gewünschter Wirkungsgrad der Brennkraftmaschine erreicht und das Ausmaß der Emissionen und mechanischen Spannungen innerhalb eines akzeptablen Bereiches liegen. Dies kann erreicht werden, indem die Schwerpunktlage der Verbrennung recht früh, beispielsweise zwischen 0 bis 15 % Kurbelwinkel nach Zünd-OT liegt.

Der erste Kraftstoff und der zweite Kraftstoff können, wie bereits gesagt, gewählt werden. Zum Beginn wird ein breiter Parametersatz definiert. Zum Beispiel:
- Zuführzeitpunkt des zweiten Kraftstoffes in die Vorkammer zwischen 400° bis 40° vor Zünd-OT
- Ladungszusammensetzung mit einem Luftüberschuss und AGR, Lambda größer als 1,6 und AGR zwischen 0 bis 40 %, entweder interne oder externe gekühlte/ungekühlte AGR.
- Menge des zweiten Kraftstoffes zwischen 0,1 bis 15 %, basierend auf dem Energiegehalt,
- Gemischtemperatur am Einlass der Zylinder 50 bis 130° C.

Vom oben genannten breiten Parametersatz werde ein anfänglicher Parametersatz in Abhängigkeit der Art der gegebenen Brennkraftmaschine (Größe der Brennkraftmaschine, Drehzahl der Brennkraftmaschine, geometrisches Verdichtungsverhältnis) verfügbare Arten von Kraftstoffen gewählt.

Als zweiter Schritt sind der gewählte erste Kraftstoff und Luft vorzumischen, um ein homogenes brennbares Gemisch bei einem angestrebten Lambda zu erzielen. Das brennfähige Gemisch soll verdünnt sein (Lambda soll groß sein), um geringe NOx-Emissionen zu erzielen. Es gibt verschiedene Wege dies zu tun, beispielsweise über einen Vergaser oder einen Gasmischer oder mit einem Port-Injection-Ventil oder mit einem Gasinjektor direkt in der Brennkammer.

Wähle spezifische Parameter aus dem breiten Parametersatz und betreibe die Brennkraftmaschine. Messe den Wirkungsgrad der Brennkraftmaschine, die Menge der Emissionen (NOx und HC, vorzugsweise auch CO), die Schwerpunktlage der Verbrennung und die Brenndauer. Die Schwerpunktlage der Verbrennung und die Brenndauer können beispielsweise aus Messen der Zeitvariationen des Zylinderdruckes geschlossen werden. Dies ist dem Fachmann bekannt.

Wenn der Wirkungsgrad der Brennkraftmaschine und die Menge der Emissionen bereits in einem gewünschten Bereich sind, behalte den ursprünglichen Parametersatz bei.

Ist die Brenndauer zu lange (d. h. der Wirkungsgrad zu gering und/oder die Emissionen zu hoch, im Speziellen die HC-Emissionen), ist beispielsweise die Brenndauer länger als 30 bis 40° Kurbelwinkel unabhängig von der Drehzahl der Brennkraftmaschine, wird die Temperatur der Zylinderladung (beispielsweise durch Erhöhen der Einlasstemperatur des Gemisches und/oder Erhöhen der Restgase im Zylinder) und/oder die Menge vom zweiten Kraftstoff erhöht. Dabei ist zu beachten, dass je höher die Temperatur der Zylinderladung desto geringer die erforderliche Menge an zweitem Kraftstoff ist und umgekehrt.

Fahre fort, die Brennkraftmaschine mit der geänderten Temperatur zu betreiben und überprüfe die Brenndauer im Hinblick auf Wirkungsgrad der Brennkraftmaschine und Emissionen. Ist die Brenndauer immer noch zu lang, erhöhe die Temperatur des brennbaren Gemisches und/oder die Menge von zweitem Kraftstoff.

Ist die Brenndauer nun zu kurz (Wirkungsgrad und Emissionen sind gut, aber der Zylinderspitzendruck ist zu groß und/oder die Druckanstiegsrate ist zu steil), verringere die Temperatur der Zylinderladung und/oder die Menge von zweitem Kraftstoff. Wiederhole diese Prozedur bis die Brenndauer innerhalb eines gewünschten Bereiches liegt. Der Zylinderspitzendruck und die Druckgradienten sind geeignete Indikatoren für mechanische Spannungen in der Brennkraftmaschine, wobei ein hoher Spitzendruck und große Gradienten eine hohe mechanische Last bedeuten.

Ein engerer Parametersatz könnte so aussehen:
- Einführungszeitpunkt des zweiten Kraftstoffes in die Vorkammer zwischen 400° bis 40° vor Zünd-OT,
- Gemisch mit Luftüberschuss und AGR, Lambda zwischen 2,3 und 2,6 oder 2,6 und 2,9, und interner AGR in einem Bereich von 3 bis 20 %,
- Menge an zweitem Kraftstoff 1 bis 7 % basierend auf dem Energiegehalt,
- Gemischtemperatur am Zylindereinlass zwischen 70 bis 100° C.

Bevorzugt ist vorgesehen, dass
- der Mitteldruck zwischen 14 und 26 bar liegt,
- das Verdichtungsverhältnis zwischen 10 und 14 liegt und
- das Einlassventilschließen bei 1 mm Hub zwischen 30° vor unterem Totpunkt und 30° nach unterem Totpunkt während des Einlasstaktes liegen.

Für alle Ausführungsbeispiele gilt, dass die Maßnahme, wonach eine Menge an zweitem Kraftstoff und/oder die chemische Zusammensetzung des zweiten Kraftstoffes, welcher in die Vorkammer eingeführt wird und/oder der Zündzeitpunkt der Vorkammer und/oder eine Temperatur der Zylinderladung so gewählt werden, dass eine gewünschte Brenndauer erzielt werden kann, im Verbrennungsbetrieb erfolgen kann.

## Patentansprüche

1. Ein Verfahren zum Betreiben einer funkengezündeten Brennkraftmaschine mit einem in wenigstens einem Zylinder bewegbaren Kolben und wenigstens einer, mit dem wenigstens einen Zylinder verbundenen Vorkammer, das Verfahren umfassend die Schritte von:
- Bilden eines zündfähigen Gemisches durch weitestgehend homogenes Mischen eines ersten Kraftstoffes und Luft und Zuführung dieser Mischung in den wenigstens einen Zylinder in einem Einlasstakt,
- Verdichten des zündfähigen Gemisches mit dem Kolben in einem Verdichtungstakt, dadurch Zuführen eines Teils des zündfähigen Gemisches in die Vorkammer,
- während des Einlass- und/oder des Verdichtungstaktes Zuführen eines zweiten Kraftstoffes in die Vorkammer zu einem Zuführungszeitpunkt vor Beginn der Verbrennung, wobei der zweite Kraftstoff die gleiche oder eine andere chemische Zusammensetzung und/oder Konzentration im Hinblick auf den ersten Kraftstoff aufweist,
- Funkenzünden in der Vorkammer
wobei eine Menge an zweitem Kraftstoff und/oder die chemische Zusammensetzung des zweiten Kraftstoffes, welcher in die Vorkammer eingeführt wird und/oder der Zündzeitpunkt der Vorkammer und/oder eine Temperatur der Zylinderladung so gewählt werden, dass eine gewünschte Brenndauer erzielt werden kann, **dadurch gekennzeichnet, dass** der Einführungszeitpunkt des zweiten Kraftstoffes zwischen 400° bis 40° vor Zünd-OT, ein Lambda-Wert von größer als 1,6, vorzugsweise größer als 1,9, eine AGR-Rate zwischen 0 bis 40 %, die Menge an zweitem Kraftstoff zwischen 0,5 bis 15 % bezüglich des Energiegehaltes des brennfähigen Gemisches, die Gemischtemperatur am Zylindereinlass zwischen 50 bis 130° C, vorzugsweise zwischen 70 bis 100° C, gewählt werden.

2. Verfahren nach Anspruch 1, **dadurch gekennzeichnet, dass** der erste Kraftstoff Erdgas oder eine Mischung von Erdgas und CO2 ist, so dass die Menge von CO2 und CH4 größer als 80 % sind.

3. Verfahren nach Anspruch 1 oder 2, wobei der zweite Kraftstoff Erdgas oder eine Kombination von Erdgas mit einem Gas mit einem H2-Gehalt von größer als 10 % ist.

4. Verfahren nach wenigstens einem der vorangegangenen Ansprüche, **dadurch gekennzeichnet, dass** die Temperatur der Zylinderladung entweder durch eine interne AGR-Rate, verblieben in der Brennkammer während des Gaswechselvorganges, oder durch eine externe AGR-Rate, zurückgeführt in das Einlasssystem, kontrolliert wird.

5. Verfahren nach wenigstens einem der vorangegangenen Ansprüche, **dadurch gekennzeichnet, dass** die Temperatur der Zylinderladung durch Beeinflussung der Einlasstemperatur von Luft und/oder ersten Kraftstoff kontrolliert wird.

6. Verfahren nach wenigstens einem der vorangegangenen Ansprüche, **dadurch gekennzeichnet, dass**, wenn die Brenndauer erhöht werden soll, der Wasserstoffgehalt des zweiten Kraftstoffes reduziert wird, wenn die Brenndauer verringert werden soll, der Wasserstoffgehalt des zweiten Kraftstoffes erhöht wird.

7. Verfahren nach wenigstens einem der vorangegangenen Ansprüche, **dadurch gekennzeichnet, dass**, wenn die Brenndauer erhöht werden soll, die Ladungstemperatur verringert wird, wenn die Brenndauer verringert werden soll, die Ladungstemperatur erhöht wird.

8. Verfahren nach wenigstens einem der vorangegangenen Ansprüche, **dadurch gekennzeichnet, dass** der Zündzeitpunkt zum Zünden der Vorkammer in einem Bereich von 30° Kurbelwinkel vor OT bis OT liegt.

9. Verfahren nach Anspruch 8, **dadurch gekennzeichnet, dass**, wenn die Brenndauer erhöht werden soll, der Zündzeitpunkt verzögert wird, wenn die Brenndauer verringert werden soll, der Zündzeitpunkt vorverlegt wird.

10. Verfahren nach wenigstens einem der vorangegangenen Ansprüche, **dadurch gekennzeichnet, dass** ein Lambda-Wert von größer als 2,0, vorzugsweise größer als 2,2, die Gemischtemperatur am Zylindereinlass zwischen 70 bis 130° C gewählt werden.

11. Verfahren nach wenigstens einem der vorangegangenen Ansprüche, **dadurch gekennzeichnet, dass**
- ein Mitteldruck zwischen 16 und 28 bar liegt,
- ein Verdichtungsverhältnis zwischen 10 und 14 liegt und
- ein Einlassventilschließen bei 1 mm Hub zwischen 30° vor unterem Totpunkt und 30° nach unterem Totpunkt während des Einlasstaktes liegen.

12. Funkengezündete Brennkraftmaschine mit wenigstens einem Zylinder und einer mit dem Hauptbrennraum verbundenen Vorkammer und einem im wenigstens einen Zylinder bewegbaren Kolben und einem Ventil zum Einführen eines zweiten Kraftstoffes in die Vorkammer, mit einer elektronischen Kontrolleinheit, die dazu ausgestaltet ist, ein Verfahren nach wenigstens einem der Ansprüche 1 bis 11 auszuführen.

## Claims

1. A method for operating a spark ignited engine, the engine having at least one cylinder and a piston movable in the at least one cylinder and at least one pre-chamber connected to the at least one cylinder and the method comprising the steps of:
• forming a combustible mixture by mixing generally homogeneously a first fuel and air and introducing this mixture into the at least one cylinder in an intake stroke
• compressing the combustible mixture with the piston in a compression stroke thereby introducing a part of the combustible mixture into the pre-chamber,
• during the intake and / or the compression stroke introducing a second fuel into the pre-chamber at an introduction-time before start of combustion the second fuel being of the same or different chemical composition and / or concentration with respect to the first fuel,
• spark igniting in the prechamber,
wherein an amount of second fuel and/or the chemical composition of second fuel introduced to the pre-chamber and/or spark timing of the pre-chamber and/or an in-cylinder charge temperature is being chosen such that a desired duration of combustion can be achieved, **characterized in that** the introduction time of the second fuel is chosen between 400° to 40° before firing TDC, a lambda value of larger than 1,6, preferably larger than 1,9, an EGR rate between 0-40%, the amount of second fuel is chosen between 0.5% to 15% with respect to the energy content of the combustible mixture, the mixture temperature at intake of cylinder is chosen between 50 - 130°C, preferably between 70 - 100°C.

2. Method according to claim 1, **characterized in that** the first fuel is natural gas or a mixture of natural gas and CO2 such that the amount of CO2 and CH4 is higher than 80%.

3. Method according to claim 1 or 2, wherein the second fuel is natural gas or a combination of natural gas and a gas with H2-content higher than 10%.

4. Method according to at least one of the preceding claims, **characterized in that** the in-cylinder charge temperature is controlled either by an internal EGR-rate kept in the combustion chamber during gas exchange process, or by an external EGR rate recirculated in the intake system.

5. Method according to at least one of the preceding claims, **characterized in that** the in-cylinder charge temperature is controlled by influencing the intake temperature of air and / or first fuel.

6. Method according to at least one of the preceding claims, **characterized in that** if the duration of combustion shall be increased the hydrogen amount in the second fuel is decreased, if the duration of combustion shall be decreased the hydrogen amount in the second fuel is increased.

7. Method according to at least one of the preceding claims, **characterized in that** if the duration of combustion shall be increased the charge temperature is decreased, if the duration of combustion shall be decreased the charge temperature is increased.

8. Method according to at least one of the preceding claims, **characterized in that** spark timing for igniting the prechamber is in a range of 30 °crank angle BTDC to TDC

9. Method according to claim 8, **characterized in that** if the duration of combustion shall be increased the spark timing is retarded, if the duration of combustion shall be decreased the spark timing is advanced.

10. Method according to at least one of the preceding claims, **characterized in that** a lambda value is chosen of larger than 2,0, preferably larger than 2,2, the mixture temperature at intake of cylinder is chosen between 70 - 130°C.

11. Method according to one of the preceding claims, **characterized in that**
- an intermediate pressure is between 16 and 28 bar,
- a compression ratio is between 10 and 14 and,
- an intake valve closing is at 1 millimeter lift between 30 degrees before bottom dead center and 30 degrees after bottom dead center during the intake stroke.

12. A spark ignited engine, the engine having at least one cylinder with a prechamber connected to a main chamber and a piston moveable in the at least one cylinder, and a valve to introduce a second fuel into the prechamber, having an electronic control unit configured to operate according to a method according to at least one of the claims 1 through 11.

## Revendications

1. Procédé servant à faire fonctionner un moteur à combustion interne à allumage par étincelle avec un piston pouvant être déplacé dans au moins un cylindre et au moins une antichambre reliée à l'au moins un cylindre, lequel procédé comprend les étapes de :
- formation d'un mélange inflammable en mélangeant de manière très homogène un premier carburant et de l'air et en amenant ledit mélange dans l'au moins un cylindre lors d'un temps d'admission,
- compression du mélange inflammable avec le piston lors d'un temps de compression, et ainsi amenée d'une partie du mélange inflammable dans l'antichambre,
- amenée, pendant le temps d'admission et/ou de compression, d'un deuxième carburant dans l'antichambre à un moment d'amenée avant le début de la combustion, dans lequel le deuxième carburant présente la même composition ou une autre composition chimique et/ou concentration par rapport au premier carburant,
- allumage par étincelle dans la préchambre,
dans lequel une quantité du deuxième carburant et/ou la composition chimique du deuxième carburant, qui est introduit dans l'antichambre, et/ou le moment d'allumage de l'antichambre et/ou une température de la charge de cylindre sont choisis de telle sorte qu'une durée de combustion souhaitée peut être obtenue, **caractérisé en ce que** le moment d'introduction du deuxième carburant entre 400° et 40° avant un PMH d'allumage, une valeur lambda supérieure à 1,6, de préférence supérieure à 1,9, un taux de recirculation de gaz d'échappement (taux RGE) compris entre 0 et 40 %, la quantité en deuxième carburant comprise entre 0,5 et 15 % par rapport à la teneur énergétique du mélange inflammable, la température de mélange à l'admission de cylindre entre 50 et 130 °C, de préférence entre 70 et 100 °C, sont choisis.

2. Procédé selon la revendication 1, **caractérisé en ce que** le premier carburant est un gaz naturel ou un mélange de gaz naturel et de CO₂ avec la quantité de CO₂ et de CH₄ supérieure à 80 %.

3. Procédé selon la revendication 1 ou 2, dans lequel le deuxième carburant est du gaz naturel ou une combinaison de gaz naturel et d'un gaz avec une teneur en H₂ supérieure à 10 %.

4. Procédé selon au moins l'une quelconque des revendications précédentes, **caractérisé en ce que** la température de la charge de cylindre est commandée soit par un taux RGE interne, subsistant dans la chambre de combustion pendant l'opération d'échange gazeux, soit par un taux RGE externe, recirculé dans le système d'admission.

5. Procédé selon au moins l'une quelconque des revendications précédentes, **caractérisé en ce que** la température de la charge de cylindre est commandée par l'influence de la température d'admission de l'air et/ou du premier carburant.

6. Procédé selon au moins l'une quelconque des revendications précédentes, **caractérisé en ce que** quand la durée de combustion doit être augmentée, la teneur en hydrogène du deuxième carburant est réduite, quand la durée de combustion doit être réduite, la teneur en hydrogène du deuxième carburant est augmentée.

7. Procédé selon au moins l'une quelconque des revendications précédentes, **caractérisé en ce que** quand la durée de combustion doit être augmentée, la température de charge est réduite, quand la durée de combustion doit être réduite, la température de charge est augmentée.

8. Procédé selon au moins l'une quelconque des revendications précédentes, **caractérisé en ce que** le moment d'allumage servant à l'allumage de la préchambre est d'approximativement d'un angle de 30° du vilebrequin avant le PMH jusqu'au PMH.

9. Procédé selon la revendication 8, **caractérisé en ce que** quand la durée de combustion doit être augmentée, le moment d'allumage est retardé, quand la durée de combustion doit être réduite, le moment d'allumage est avancé.

10. Procédé selon au moins l'une quelconque des revendications précédentes, **caractérisé en ce qu'**une valeur lambda supérieure à 2,0, de préférence supérieure à 2,2, la température de mélange à l'admission de cylindre entre 70 et 130 °C sont choisies.

11. Procédé selon au moins l'une quelconque des revendications précédentes, **caractérisé en ce que**
- une pression moyenne se situe entre 16 et 28 bars,
- un rapport de compression se situe entre 10 et 14, et
- une fermeture de soupape d'admission est comprise pour une course de 1 mm entre 30° avant le point mort bas et 30° après le point mort bas pendant le cycle d'admission.

12. Moteur à combustion interne à allumage par étincelle avec au moins un cylindre et une antichambre reliée à la chambre de combustion principale et un piston pouvant être déplacé dans au moins un cylindre et une soupape servant à introduire un deuxième carburant dans l'antichambre, avec une unité de commande électronique, qui est configurée pour exécuter un procédé selon au moins l'une quelconque des revendications 1 à 11.
